# EUROPÄISCHE PATENTSCHRIFT

(11) **EP 1 798 116 B1**
(45) Veröffentlichungstag und Bekanntmachung des Hinweises auf die Patenterteilung: **15.10.2008**
(21) Anmeldenummer: 06120861.7
(22) Anmeldetag: 19.09.2006
(51) Int. Cl.: B60R 21/13

(54) **Überrollschutzsystem für Kraftfahrzeuge mit einem faltbaren Überrollbügel**
Foldable rollover protection system for a convertible vehicle
Système d'arceau pliant de sécurité pour voiture cabriolet

(30) Priorität: 15.12.2005 DE 102005059910
(43) Veröffentlichungstag der Anmeldung: 20.06.2007
(73) Patentinhaber: ISE Automotive GmbH, 51702 Bergneustadt (DE)
(72) Erfinder: Beki, Gürkan, 51766 Engelskirchen (DE)
(74) Vertreter: Fuchs

(56) Entgegenhaltungen:
- WO-A-00/55015
- WO-A-91/02669
- DE-C1- 10 143 934
- "ADVERTISEMENT" AUTOMOTIVE ENGINEERING, SOCIETY OF AUTOMOTIVE ENGINEERS. WARRENDALE, US, Bd. 98, Nr. 12, 1. Dezember 1990 (1990-12-01), Seiten 55-56,59,60,, XP000204655 ISSN: 0098-2571

## Beschreibung

Die Erfindung bezieht sich auf ein Überrollschutzsystem für Kraftfahrzeuge, mit fahrzeugsitzbezogen angeordneten Überrollbügeln, die jeweils in einer fahrzeugfesten Halterung geführt aufgenommen ist, und im Normalzustand durch eine Haltevorrichtung in einer unteren, abgelegten Ruhelage haltbar sowie sensorgesteuert unter Lösen der Haltevorrichtung in eine aufgestellte, stützende Stellung bringbar sind.

Derartige Überrollschutzsysteme dienen zum Schutz der Insassen in Kraftfahrzeugen ohne schützendes Dach, typischerweise in Cabriolets oder Sportwagen, indem sie bei einem Überschlag einen Überlebensraum für die Insassen aufspannen.

Es ist dabei bekannt, einen die gesamte Fahrzeugbreite überspannenden, fest installierten Überrollbügel vorzusehen (EP 0 233 777) oder jedem Fahrzeugsitz einen fest installierten Überrollbügel (DE 196 04 423) zuzuordnen. Beide Lösungen beziehen sich auf einen sogenannten starren Überrollbügel, d.h. auf einen Überrollbügel, der im Fall eines drohenden Überschlages nicht aktiv aufgestellt, d. h. nicht von einer abgelegten Ruhelage in eine aufgestellte Stützlage ausgefahren wird. Durch die DE 600 01 224 T2, die als WO 00/55015 veröffentlich ist, ist es dabei bekannt geworden, für einen sitzbezogenen starren Überrollbügel zwei verschieden hohe Stütz-Positionen vorzusehen, eine etwas abgesenkte Position bei geschlossenem Verdeck und eine erhöhte Position bei geöffnetem Verdeck. Dies wird jeweils durch einen Faltbügel mit zwei gelenkig miteinander verbundenen Bügelarmen, die mit ihren freien Enden jeweils auf einer horizontalen Gewindestange längs verschiebbar gekoppelt mit der Dachverschiebung angebracht sind, erzielt.

Bei dieser bekannten Konstruktion ist keine abgelegte Position des Überrollbügels wie bei einem aktiven System vorhanden, sondern sie beinhaltet einen starren, stets aufgestellten Überrollbügel mit zwei unterschiedlich hohen Stützpositionen. Eine abgelegte Position ließe auch die Konstruktion raumbedingt nicht zu.

Am Markt setzen sich immer mehr konstruktive Lösungen für sogenannte aktive Überrollbügel durch, bei denen der Überrollbügel im Normalzustand abgelegt ist, und im Gefahrenfall, also bei einem drohenden Überschlag, sensorgesteuert schnell in eine schützende Position aufgestellt wird, um zu verhindern, dass die Fahrzeuginsassen durch das sich überschlagende Fahrzeug erdrückt werden.

Diese Lösungen weisen typischerweise für jeden Sitz einen in einem fahrzeugfesten Kassetten-Gehäuse linear geführten U-förmigen oder aus einem Profilkörper gebildeten Überrollbügel, auf, der im Normalzustand gegen die Vorspannkraft einer Antriebs-Druckfeder durch eine Haltevorrichtung in einer unteren Ruhelage gehalten wird, und im Überschlagfall, sensorgesteuert unter Lösen der Haltevorrichtung, durch die Federkraft in eine obere, stützende Stellung bringbar ist, wobei eine dann in Wirkeingriff tretende Verriegelungseinrichtung ein Eindrücken des Überrollbügels in die Kassette verhindert.

Die Haltevorrichtung besitzt dabei typischerweise ein am Überrollkörper befestigtes Halteglied, das in lösbarer mechanischer Wirkverbindung mit einem Auslöseglied an einem sensorgesteuerten Auslösesystem steht, das typischerweise durch einen Auslösemagneten, den sogenannten Crashmagneten, oder durch ein pyrotechnisches Auslöseglied, gebildet ist.

Die Verriegelungseinrichtung, auch als Wiedereinfahrsperre bezeichnet, besteht typischerweise aus einer schwenkbar angelenkten, federvorgespannten Sperrklinke mit Zahnsegmenten und einer feststehenden Zahnleiste, einem Rastdorn oder dergleichen, wobei, je nach Konstruktion ein Verriegelungselement mit dem Überrollbügel und das andere fahrzeugfest verbunden ist.

Eine Kassetten-Konstruktion eines Überrollbügelschutzsystems mit linear aufstellendem Überrollbügel und mit einer Sperrklinke in der Verriegelungseinrichtung zeigt beispielsweise die DE 100 40 642 C1.

Es sind auch andere Konstruktionen von aufstellbaren Überrollbügeln bekannt, beispielsweise gemäß der DE 39 25 513 A1 sogenannte Drehbügel, die sitzbezogen um die Fahrzeuglängsachse aufschwenkbar sind, oder ein die Fahrzeugbreite überspannender Schwenkbügel gemäß der DE 37 32 562 C1, der rückwärtig im Bereich hinter den Fondsitzen brüstungsbündig ablegbar und im Gefahrenfall drehbar um eine Fahrzeug-Querachse hochschwenkbar ist.

Es ist durch die DE 101 43 934 A1 auch ein aktiver falt- oder zusammenklappbarer Überrollbügel bekannt geworden, gebildet durch ein zumindest annähernd quer über die Breite des Kraftfahrzeuges reichendes Überroll-Querjoch und zwei Schenkelelemente, die mit einem Ende in dem Querjoch längsverschiebbar aufgenommen und jeweils mit dem anderen Ende, vorgespannt durch eine Drehfeder, drehbeweglich an der Karosserie angelenkt sind.

In der abgelegten Ruhestellung des Überroll-Querjoches sind dabei die beiden Schenkelelemente Stirn an Stirn axial hintereinander in dem Überroll-Querjoch aufgenommen. Im Crash-Fall werden sie, unter Auffalten oder Aufklappen des Überrollbügels als Ganzes, durch die beiden Drehfedern in die Stützstellung aufgestellt.

Diese bekannte Konstruktion eines Faltbügels ist bei sitzbezogenen aktiven Überrollbügeln nicht anwendbar. Die schwenkbaren Schenkelelemente liegen im abgelegten Zustand axial hintereinander. Da ihre Länge die Überrolltangente bestimmt, müssen sie eine vorgegebene Länge haben, so dass die Länge beider Schenkelelemente zusammen die Breite eines sitzbezogenen Überrollbügels überschreiten würde.

Ferner ist die bekannte Konstruktion eines Faltbügels durch die dreiteilige Konzeption - zwei Bügelschenkel und ein Querjoch - relativ aufwändig.

Der Erfindung liegt die Aufgabe zugrunde, mit relativ geringem Aufwand ein sitzbezogenes Überrollschutzsystem mit einem Faltbügel zu schaffen.

Die Lösung dieser Aufgabe gelingt erfindungsgemäß mit einem Überrollschutzsystem für Kraftfahrzeuge mit fahrzeugsitzbezogen angeordneten Überrollbügeln, die jeweils in einer fahrzeugfesten Halterung geführt aufgenommen sind und im Normalzustand durch eine Haltevorrichtung in einer unteren, abgelegten Ruhelage haltbar sowie sensorgesteuert unter Lösen der Haltevorrichtung in eine aufgestellte, stützende Stellung bringbar sind, welches dadurch gekennzeichnet ist, dass jeder Überrollbügel zwei Bügelschenkel aufweist, die jeweils beabstandet in der Querachse des Fahrzeuges mit einem Ende in Lagern in der fahrzeugfesten Halterung drehbar angelenkt sind und mit ihrem freien Ende faltend gegenseitig verschiebbar und im aufgestellten Zustand gegenseitig verriegelt gekoppelt sind.

Die Erfindung schafft daher ein Überrollschutzsystem, welches zusammengefaltet in der Halteposition verharrt und bei einem drohenden Überschlag aus der zusammengefalteten Halteposition in eine aufgefaltete verriegelte Position fährt, wobei sich die dabei zusammengefalteten Bügelschenkel aufstellen und in der aufgestellten Position gegenseitig verriegeln.

Durch die erfindungsgemäßen Maßnahmen ist es möglich, auch bei Fahrzeugen, die nur über ein geringes Platzangebot verfügen, ein wirksames Überrollschutzsystem mit einem Faltbügel zu integrieren, insbesondere in solchen Fahrzeugen, wo das Raumangebot im Bereich der Rückenlehne unterhalb des Faltbügels für andere Zwecke benötigt wird. Dies trifft beispielsweise dort zu, wo Platz für Durchlademöglichkeiten oder aber zum Ablegen eines Faltdaches vorhanden sein muss.

Ebenso wird dadurch die Möglichkeit geschaffen, zusätzlich festigkeitssteigernde Bauteile zu integrieren.

Ein weiterer Vorteil besteht darin, dass die Erfindung zu einem kostengünstigen, wenige Bauteile aufweisenden Überrollschutzsystem führt, was entscheidend den Kostendruck, der in der Automobilindustrie, insbesondere im Zulieferbereich, herrscht, berücksichtigt.

Je nach Form der Bügelschenkel kann der Faltvorgang unterschiedlich sein. Bei einer Schalenbauweise z.B. liegen die zusammengefalteten Bügelschenkel übereinander, bei flachen Bügelschenkeln eher nebeneinander, und bei rohrförmigen Bügelschenkeln können diese auch konzentrisch zueinander verfahren werden.

Weitere Ausgestaltungen und Weiterbildungen der Erfindung sind in Unteransprüchen gekennzeichnet und ergeben sich auch aus der Figurenbeschreibung.

Anhand eines in den Patentzeichnungen in verschiedenen Ansichten und Zuständen dargestellten vorteilhaften Ausführungsbeispieles wird die Erfindung näher erläutert.

Es zeigen:
- Fig. 1: in einer isometrischen Darstellung den erfindungsgemäßen, aus zwei zusammenklappbaren Bügelschenkeln bestehenden Faltbügel im aufgestellten, verriegelten Zustand,
- Fig. 2: in einer isometrischen Darstellung den erfindungsgemäßen Faltbügel im abgelegten, gehaltenen Ruhezustand,
- Fig. 3: in einer Ausschnitt-Darstellung aus Fig. 1 den Faltbügel mit aufgeschnittener Außenschale des einen, nicht angetriebenen Bügelschenkels,
- Fig. 4: in einer Darstellung entsprechend Fig. 3 den erfindungsgemäßen Faltbügel, jedoch ohne Außenschale des nicht angetriebenen Bügelschenkels,
- Fig. 5: in einer isometrischen Ausschnitt-Darstellung den abgelegten Faltbügel nach Fig. 2 mit teilweise weggebrochener Außenschale des nicht angetriebenen Bügelschenkels unter Darstellung der Elemente für die Verriegelung der Bügelschenkel im aufgestellten Zustand,
- Fig. 6: eine Querschnitt-Ansicht der Bügelschenkel im Bereich der Verriegelungselemente,
- Fig. 7: eine Darstellung nach Fig. 5, jedoch rückseitig betrachtet unter Darstellung der Haltevorrichtung für das Niederhalten der zusammengeklappten Bügelschenkel im Grundzustand,
- Fig. 8: in einer Seiten-Darstellung den Zustand des Faltbügels und der Haltevorrichtung im aufgestellten Zustand, und
- Fig. 9: in einer isometrischen Ausschnitt-Darstellung die Kopplung einer antreibenden Schraubenfeder mit dem zugehörigen Bügelschenkel.

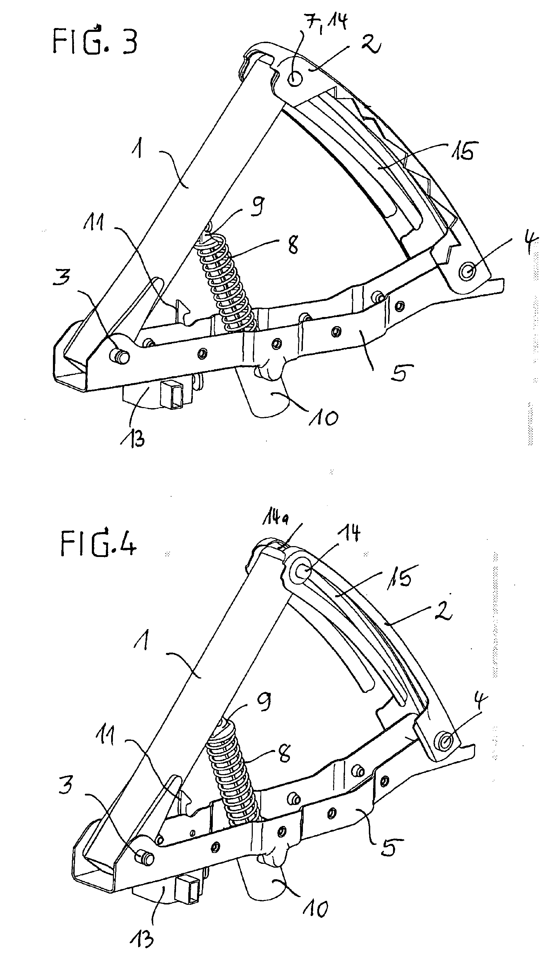

Die Figuren zeigen einen erfindungsgemäß ausgebildeten Faltbügel als fahrzeugsitzbezogenen Überrollkörper eines Überrollschutzsystems für Kraftfahrzeuge. Dieser Faltbügel besteht aus zwei Bügelschenkeln 1 bzw. 2, von denen das eine Ende jeweils drehbar in Lagern 3 bzw. 4 in einem Grundrahmen 5 (Fig. 3 oder 4) eines karosseriefesten Träger 6, der durch eine Kassettenkonstruktion oder einen Abschnitt in einem Querträger der Rückwand des Fondraumes, gebildet sein kann, angelenkt ist, und von denen die anderen Enden, wie noch erläutert wird, drehbeweglich und zueinander verschiebbar miteinander verbunden sind.

Im dargestellten Ausführungsbeispiel sind die Bügelschenkel 1, 2 in Verbindung mit dem Grundrahmen 5 in Schalenbauweise ausgeführt, damit sie raumsparend ineinander faltbar und im Grundrahmen 5 aufnehmbar sind. Denkbar sind jedoch auch Ausführungsformen der Bügelschenkel als Rohrkonstruktionen oder als Bauteilgeometrien, die mit Verfahren hergestellt werden, die es erlauben, komplexe Bauteile auszubilden.

Die festen Lager 3 bzw. 4 nehmen bei einem Überschlag die dabei entstehenden Kräfte auf und leiten sie in die Karosserie ab. Sie müssen daher entsprechend stark dimensioniert und im Grundrahmen 5 befestigt sein.

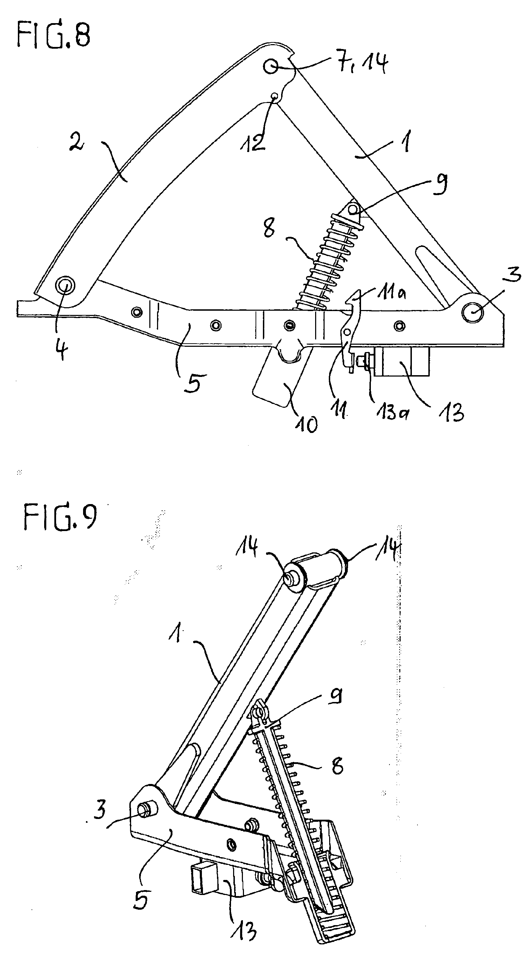

Zum Aufstellen des Faltbügels ist eine Antriebs-Druckfeder 8 in Form einer Schraubenfeder vorgesehen, die, wie insbesondere die Fig. 9 zeigt, sich mit einem Ende an einem Flansch eines Federführungsbolzens 9, der am Bügelschenkel 1 drehbar angelenkt ist und sich mit dem anderen Ende in einem becherförmigen Fortsatz 10 des Grundrahmens abstützt. Die Anordnung kann jedoch auch so getroffen sein, dass beiden Bügelschenkeln 1, 2 jeweils eine AntriebsFeder zugeordnet ist. Anstelle einer Druckfeder in Form einer Schraubenfeder kann auch eine Spiralfeder, Schenkelfeder oder dergleichen vorgesehen sein.

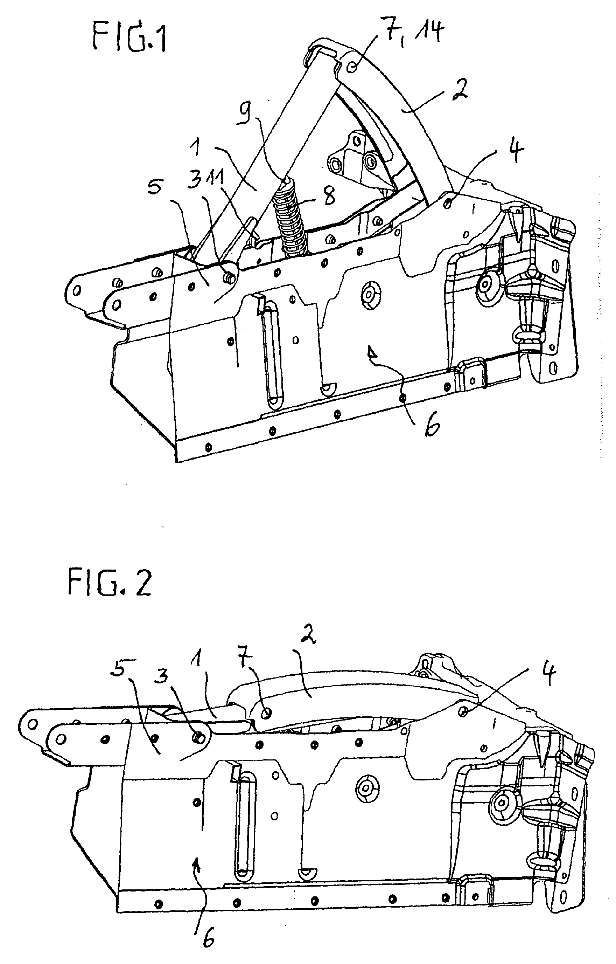

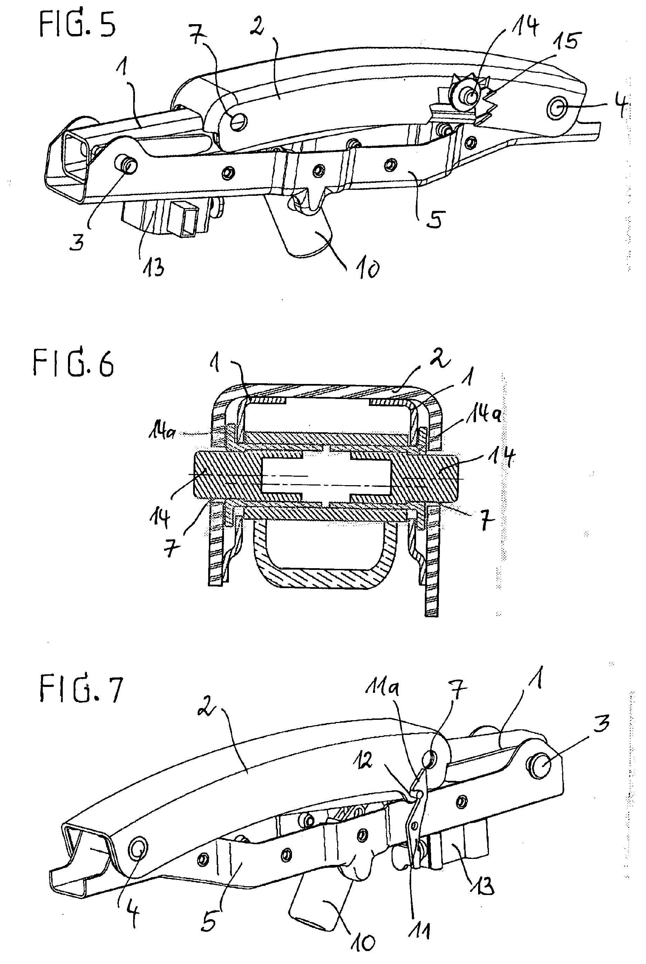

Im zusammengefalteten, d.h. abgelegten Ruhezustand des Faltbügels (Figuren 2, 7) ist die Antriebs-Druckfeder 8 vorgespannt. Durch eine lösbare Haltevorrichtung wird der Faltbügel in dieser Position gehalten. Für diese Haltevorrichtung ist eine Reihe von Konstruktionen denkbar, wie sie insbesondere durch den einschlägigen Stand der Technik bekannt geworden sind. Im dargestellten Ausführungsbeispiel besteht sie, wie insbesondere die Fig. 7 zeigt, aus einer drehbeweglich am Grundrahmen 5 angelenkten (vorgespannten) Halteklinke 11 mit einem hakenförmigen Hebelarm 11 a, der in Wirkverbindung mit einem Halteglied, gebildet durch einen am nicht angetriebenen Bügelschenkel 2 befestigten Haltestift 12, steht.

Der andere Hebelarm der Halteklinke 11 steht, wie insbesondere die Fig. 8 zeigt, in Wirkverbindung mit einem Auslösestift 13 a eines karosseriefest angebrachten Aktuators 13, der durch einen elektromagnetischen oder pyrotechnischen Aktuator gebildet sein kann.

Wird der Aktuator 13 sensorgesteuert bei einem drohenden Überschlag aktiviert, stößt er den Auslösestift 13 a aus, der seinerseits die Halteklinke 11 verschwenkt und dabei den Haltestift 12 freigibt, wodurch die Antriebs-Druckfeder 8 den angetriebenen Bügelschenkel 1 aufstellt, der dann den nicht angetriebenen Bügelschenkel 2 mit hochzieht. Dieses "Mit-Hoch-Ziehen" erfolgt durch die besondere Art der Verbindung beider Bügelschenkel 1, 2. Wie die Fig. 9 in Verbindung mit der Querschnitt-Ansicht nach Fig. 6 zeigt, sind am vorderen Ende des angetriebenen Bügelschenkels 1 zwei unter Federvorspannung geführte Bolzen 14 in Führungsbuchsen 14 a angebracht. Diese Bolzen sind in einer innen im mitgenommenen Bügelschenkel 2 ausgebildeten Kulisse 15 (Fig. 4) aufgenommen und werden durch die Federvorspannung nach außen gespreizt. Im abgelegten Zustand befinden sich die Bolzen am unteren Ende der Kulisse des nicht angetriebenen Bügelschenkels 2. Stellt die Antriebs-Druckfeder 8 den Bügelschenkel 1 auf, nehmen die Bolzen 14 den anderen Bügelschenkel 2 über die Kulisse 15 mit, bis die aufgestellte Position gemäß den Figuren 1, 3, 4 und 8, 9 erreicht ist. In dieser Position rasten die Bolzen 14 in Öffnungen 7 des mitgenommenen Bügelschenkels 2 ein.

Damit die aufgestellten Bügelschenkel bei einem Überschlag nicht eingedrückt werden kann, müssen sie in der aufgestellten Position verriegelt werden (Wiedereinfahrsperre). Die entsprechende Verriegelungseinrichtung wird durch die Bolzen 14 einerseits und durch die Öffnungen 7 andererseits gebildet.

Es versteht sich, dass auch andere prinzipiell bekannte Verriegelungsmechanismen, wie z. B. eine Klinkenverriegelung, zum Einsatz kommen kann.

Im aufgestellten Zustand bilden die beiden Bügelschenkel 1, 2 zusammen mit dem Grundrahmen 5 ein Dreieck. Durch diese Dreieckkonfiguration und die drehbare Lagerung der Bügelschenkel wirken diese als Druckstäbe und können dementsprechend sehr hohe Druckkräfte in die Fahrzeugstruktur übertragen.

Es ist betrieblich nach einer ungewollten Auslösung des Überrollbügels oder nach einer Auslösung zu Test-/Inspektionszwecken notwendig, das System zu entriegeln und den Überrollbügel zu reversieren, d. h. in die gehaltene Ruhelage, typischerweise gegen die Kraft der vorgespannten Antriebs-Druckfedern, zu bringen. Das Reversieren geschieht durch Betätigen einer Reversiereinrichtung, d.h. die beiden Bolzen 14 werden gegen ihre Federkraft zusammengedrückt, die Bolzen gelangen dadurch aus den Öffnungen 7 zurück in die Kulisse 15 und die Bügelschenkel werden gegen die Kraft der Antriebs-Druckfeder 8 geführt in die Ausgangslage gebracht. Die Halteklinke 11 rastet schließlich am Haltestift 12 ein und das System ist wieder betriebsbereit.

Die aufstellende Druckfeder kann auch kraftlos geschaltet werden.

### Bezugszeichenliste

- 1: angetriebener Bügelschenkel
- 2: nicht angetriebener Bügelschenkel
- 3: Lager (des angetriebenen Bügelschenkels)
- 4: Lager (des nicht angetriebenen Bügelschenkels)
- 5: Grundrahmen
- 6: karosseriefester Träger
- 7: Öffnungen
- 8: Antriebs-Druckfeder
- 9: Federführungsbolzen
- 10: becherförmiger Fortsatz
- 11: Halteklinke
- 11 a: hakenförmiger Hebelarm
- 12: Haltestift
- 13: Aktuator
- 13 a: Auslösestift
- 14: Bolzen
- 14 a: Führungsbuchse
- 15: Kulisse

## Patentansprüche

1. Überrollschutzsystem für Kraftfahrzeuge mit fahrzeugsitzbezogen angeordneten Überrollbügeln, die jeweils in einer fahrzeugfesten Halterung geführt aufgenommen sind und im Normalzustand durch eine Haltevorrichtung in einer unteren, abgelegten Ruhelage haltbar sowie sensorgesteuert unter Lösen der Haltevorrichtung in eine aufgestellte, stützende Stellung bringbar sind, **dadurch gekennzeichnet, dass** jeder Überrollbügel zwei Bügelschenkel (1, 2) aufweist, die jeweils beabstandet in der Querachse des Fahrzeuges mit einem Ende in Lagern (3, 4) in der fahrzeugfesten Halterung (6) drehbar angelenkt sind und mit ihrem freien Ende faltend gegenseitig verschiebbar und im aufgestellten Zustand gegenseitig verriegelt gekoppelt sind.

2. Überrollschutzsystem nach Anspruch 1, **dadurch gekennzeichnet, dass** die beiden Bügelschenkel (1, 2) in Schalenbauweise ineinander faltbar ausgeführt sind.

3. Überrollschutzsystem nach Anspruch 1 oder 2, **dadurch gekennzeichnet, dass** die fahrzeugfeste Halterung (6) kopfseitig einen trogartigen Grundrahmen (5) besitzt, in welchem die Lager (3, 4) der Bügelschenkel (1, 2) angebracht sind und welcher die zusammengefalteten Bügelschenkel (1, 2) aufnimmt.

4. Überrollschutzsystem nach einem der Ansprüche 1 bis 3, **dadurch gekennzeichnet, dass** zum Aufstellen der zusammengefalteten Bügelschenkel (1, 2) eine Antriebsfeder vorgesehen ist.

5. Überrollschutzsystem nach Anspruch 4, **dadurch gekennzeichnet, dass** die Antriebsfeder durch eine Schraubenfeder (8) gebildet ist.

6. Überrollschutzsystem nach Anspruch 5, **dadurch gekennzeichnet, dass** die Antriebs-Schraubenfeder (8) nur einem der Bügelschenkel (1) zugeordnet ist.

7. Überrollschutzsystem nach Anspruch 6, **dadurch gekennzeichnet, dass** die Antriebs-Schraubenfeder (8) einen Federführungsbolzen (9) umfasst, welcher drehbar an dem zugeordneten Bügelschenkel (1) angelenkt ist und einen flanschartigen radialen Fortsatz zur Abstützung des einen Endes der Antriebs-Schraubenfeder (8) aufweist, wobei zum Abstützen des anderen Endes ein karosseriefester Stützpunkt (10) vorgesehen ist.

8. Überrollschutzsystem nach einem der Ansprüche 1 bis 7, **dadurch gekennzeichnet, dass** die Haltevorrichtung eine drehbar an der fahrzeugfesten Halterung (6) angelenkte Halteklinke (11) in Verbindung mit einem an einem der Bügelschenkel (1, 2) angebrachten Halteglied (12) aufweist, und ein Aktuator (13) vorgesehen ist, der in auslösender Wirkverbindung mit der Halteklinke (11) steht.

9. Überrollschutzsystem nach einem der Ansprüche 1 bis 8, **dadurch gekennzeichnet, dass** das freie Ende eines der Bügelschenkel (1) zwei gegenüberliegende Bolzen (14) aufweist, die in einer Kulissenführung (15), die in dem anderen Bügelschenkel (2) ausgebildet ist, gleitend aufgenommen sind.

10. Überrollschutzsystem nach Anspruch 9, **dadurch gekennzeichnet, dass** die Bolzen (14) federvorgespannt gelagert sind und der die Kulissenführung (15) aufweisende Bügelschenkel (2) kopfseitig zwei gegenüberliegende Öffnungen (7) zur verriegelnden Aufnahme der Bolzen (14) im aufgestellten Zustand der Bügelschenkel (1, 2) besitzt.

## Claims

1. A roll-over protection system for motor vehicles, comprising roll bars which are arranged in a seat-specific manner and are each accommodated and guided in a mounting fixed to the vehicle and which, in the normal state, can be held in a lower, lying, rest position by a holding device and are movable in a sensor-controlled manner into a raised, supporting position by releasing the holding device, **characterised in that** each roll bar has two bar arms (1, 2) which are -each rotatably articulated at one end, spaced on the transverse axis of the vehicle, in supports (3, 4) in the mounting (6) fixed to the vehicle and which are mutually displaceable so as to fold at their free end and are coupled so as to be mutually locked in the raised position.

2. A roll-over protection system according to claim 1, **characterised in that** the two bar arms (1, 2) are constructed so as to be foldable together in a shell-type construction.

3. A roll-over protection system according to claim 1 or 2, **characterised in that** the mounting (6) fixed to the vehicle has at the top a trough-shaped basic frame (5) in which the supports (3, 4) of the bar arms (1, 2) are provided and which accommodates the folded bar arms (1, 2).

4. A roll-over protection system according to any one of claims 1 to 3, **characterised in that** a driving spring is provided for raising the folded bar arms (1, 2).

5. A roll-over protection system according to claim 4, **characterised in that** the driving spring is formed by a helical spring (8).

6. A roll-over protection system according to claim 5, **characterised in that** the helical driving spring (8) is associated with only one of the bar arms (1).

7. A roll-over protection system according to claim 6, **characterised in that** the helical driving spring (8) comprises a spring guiding bolt (9) which is rotatably articulated on the associated bar arm (1) and has a flange-type radial projection for supporting the one end of the helical-driving spring (8), wherein a supporting point (10) fixed to the body is provided for supporting the other end.

8. A roll-over protection system according to any one of claims 1 to 7, **characterised in that** the holding device comprises a holding pawl (11) which is rotatably articulated on the mounting (6) fixed to the vehicle, in combination with a holding member (12) mounted on one of the bar arms (1, 2), and an actuator (13) is provided which is operatively connected to and releases the holding pawl (11).

9. A roll-over protection system according to any one of claims 1 to 8, **characterised in that** the free end of one of the bar arms (1) has two opposing pins (14) which are slidably held in a sliding guide (15) formed in the other bar arm (2).

10. A roll-over protection system according to claim 9, **characterised in that** the pins (14) are mounted in a spring-loaded manner, and the bar arm (2) having the sliding guide (15) has, at its top end, two opposing openings (7) for receiving and locking the pins (14) in the raised position of the bar arms (1, 2).

## Revendications

1. Système de protection en cas de capotage pour des véhicules automobiles équipés d'arceaux en cas de capotage, disposés en se référant aux sièges de véhicule, logés chacun, de façon guidée, dans une fixation fixée au véhicule et aptes à être maintenus, à l'état normal, au moyen d'un dispositif de maintien, en une position de repos abaissée, inférieure, et aptes à être placés, sous la commande de capteurs, avec relâchement du dispositif de maintien, en une position de soutien, dressée, **caractérisé en ce que** chaque arceau en cas de capotage présente deux branches d'arceau (1, 2), chacune articulée de façon à pouvoir tourner, de façon espacée dans l'axe transversal du véhicule, dans la fixation (6) fixée au véhicule, par une extrémité, dans des paliers (3, 4), et aptes à se déplacer mutuellement par une de leurs extrémités, avec effet de pliage, et, à l'état dressé, couplées mutuellement, de façon verrouillée.

2. Système de protection en cas de capotage selon la revendication 1, **caractérisé en ce que** les deux branches d'arceau (1, 2) sont réalisées de manière à être pliable l'une dans l'autre, selon une construction en coque.

3. Système de protection en cas de capotage selon la revendication 1 ou 2, **caractérisé en ce que** la fixation (6) fixée au véhicule comprend, côté tête, un cadre de base (5) du genre d'une cuvette, dans lequel sont montés les paliers (3, 4) des branches d'arceau (1, 2) et qui reçoit les branches d'arceau (1, 2) repliées.

4. Système de protection en cas de capotage selon l'une des revendications 1 à 3, **caractérisé en ce qu'**un ressort d'entraînement est prévu pour dresser les branches d'arceau (1, 2) repliées.

5. Système de protection en cas de capotage selon la revendication 4, **caractérisé en ce que** le ressort d'entraînement est formé par un ressort hélicoïdal (8).

6. Système de protection en cas de capotage selon la revendication 5, **caractérisé en ce que** le ressort d'entraînement (8) hélicoïdal est associé à une seule des branches d'arceau (1).

7. Système de protection en cas de capotage selon la revendication 6, **caractérisé en ce que** le ressort d'entraînement (8) hélicoïdal comprend un boulon de guidage de ressort (9), articulé à rotation sur la branche d'arceau (1) associée, et présente un prolongement radial du genre d'une bride, pour soutenir une extrémité du ressort d'entraînement (8) hélicoïdal, un point d'appui (10) fixé à la carrosserie étant prévu pour soutenir l'autre extrémité.

8. Système de protection en cas de capotage selon l'une des revendications 1 à 7, **caractérisé en ce que** le dispositif de maintien présente un cliquet de maintien (11), articulé à rotation sur la fixation (6) fixée au véhicule, en liaison avec un organe de maintien (12) monté sur l'une des branches d'arceau (1, 2), et un actionneur (13) est prévu, placé en liaison fonctionnelle de déclenchement avec le cliquet de maintien (11).

9. Système de protection en cas de capotage selon l'une des revendications 1 à 8, **caractérisé en ce que** l'extrémité libre d'une des branches d'arceau (1) présente deux boulons (14) opposés, logés de façon glissante dans un guidage en coulisse (15), réalisé dans l'autre branche d'arceau (2).

10. Système de protection en cas de capotage selon la revendication 9, **caractérisé en ce que** les boulons (14) sont montés sous précontrainte élastique, et la branche d'arceau (2), présentant le guidage en coulisse (15), comprend, côté tête, deux ouvertures (7) opposées, pour loger, avec effet de verrouillage, les boulons (14), lorsque les branches d'arceau (1, 2) se trouvent à l'état dressé.
